# EUROPÄISCHE PATENTSCHRIFT

(11) **EP 1 714 014 B1**
(45) Veröffentlichungstag und Bekanntmachung des Hinweises auf die Patenterteilung: **16.03.2011**
(21) Anmeldenummer: 04803871.5
(22) Anmeldetag: 15.12.2004
(51) Int. Cl.: F02B 29/04, F01P 7/16

(54) **KREISLAUFANORDNUNG ZUR KÜHLUNG VON LADELUFT UND VERFAHREN ZUM BETREIBEN EINER DERARTIGEN KREISLAUFANORDNUNG**
CIRCUIT ARRANGEMENT FOR THE COOLING OF CHARGE AIR AND METHOD FOR OPERATION OF SUCH A CIRCUIT ARRANGEMENT
CIRCUIT POUR REFROIDIR L'AIR DE SURALIMENTATION ET PROCEDE POUR FAIRE FONCTIONNER LEDIT CIRCUIT

(30) Priorität: 19.12.2003 DE 10360400
(43) Veröffentlichungstag der Anmeldung: 25.10.2006
(73) Patentinhaber: Behr GmbH & Co. KG, 70469 Stuttgart (DE); Behr Thermot-tronik GmbH, 70806 Kornwestheim (DE)
(72) Erfinder: HOLZBAUR, Thomas, 70619 Stuttgart (DE); MÜLLER, Rolf, 71642 Ludwigsburg (DE); PANTOW, Eberhard, 71696 Möglingen (DE); PARMENTIER, Sarah, 74321 Bietigheim-Bissingen (DE); WILLERS, Eike, 70469 Stuttgart (DE)
(74) Vertreter: Grauel, Andreas
(86) Internationale Anmeldenummer: PCT/EP2004/014249
(87) Internationale Veröffentlichungsnummer: WO 2005/061869

(56) Entgegenhaltungen:
- EP-A- 0 584 850
- DE-A- 10 215 262
- DE-A- 19 902 504
- US-A- 4 325 219
- US-A1- 2003 015 183

## Beschreibung

Die Erfindung betrifft eine Kreislaufanordnung zur Kühlung von Ladeluft bei einem Kraftfahrzeug mit einem Aufladegerät sowie ein Verfahren zum Betreiben einer derartigen Kreislaufanordnung.

Gemäß dem Stand der Technik werden zur Leistungssteigerung von Motoren Aufladegeräte zur Erhöhung des Luftdurchsatzes im Motor verwendet. Bei der hierfür erforderlichen Verdichtung wird die Luft, im Folgenden als Ladeluft bezeichnet, jedoch auf Grund der Kompression im Aufladegerät erwärmt. Um den mit der Erwärmung der Ladeluft einhergehenden Dichteverlust zu kompensieren, d.h. die Luftdichte zu erhöhen, werden Luftkühler verwendet, die vorne im Kühlmodul angeordnet sind und zur Kühlung der Ladeluft dienen. Die Ladeluft strömt dabei durch einen Wärmetauscher, der von Umgebungsluft durchströmt und damit gekühlt wird. Dadurch ist eine Abkühlung der Ladeluft auf eine Temperatur möglich, die bei voller Motorleistung etwa 15 K über der Temperatur der Umgebungsluft liegt.

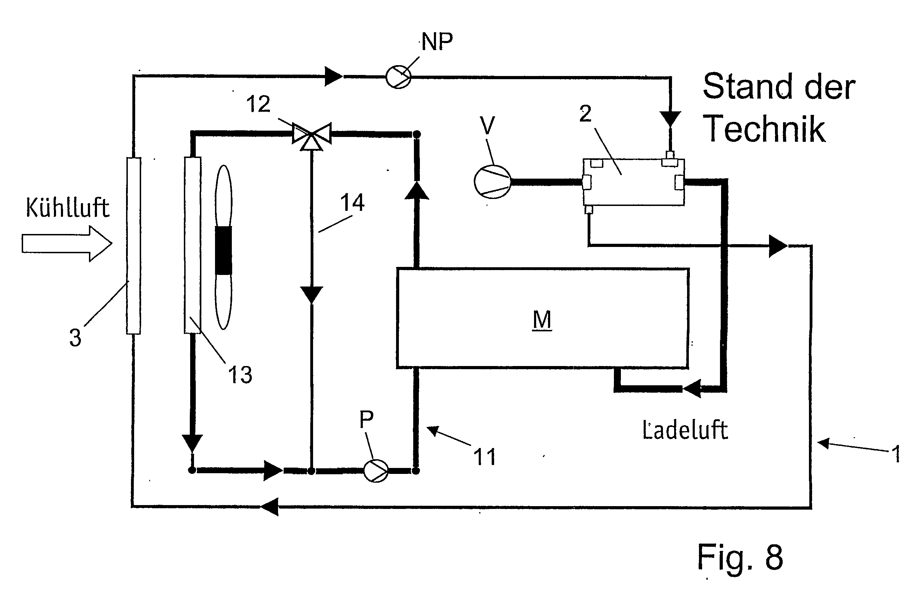

Ferner ist bekannt, dass die Kühlung der Ladeluft über einen Kühlmittelkreislauf erfolgt, beispielsweise einem Niedertemperatur-Kühlmittelkreislauf, in dem das Kühlmittel auf sehr niedrige Temperaturen herabgekühlt wird. Mit diesem kalten Kühlmittel wird die Ladeluft in einem Ladeluft/Kühlmittel-Kühler auf eine vorgegebene Kühltemperatur heruntergekühlt. Für die Verschaltung des Niedertemperatur-Kühlmittelkreislaufs gibt es zwei Varianten, nämlich eine Integration des Niedertemperatur-Kühlmittelkreislaufs in einen Nebenkreislauf des Motorkühlsystems oder eine Ausgestaltung in Form eines separaten Kühlmittelkreislaufs. In Fig. 8 ist ein bekannter Niedertemperatur-Kühlmittelkreislauf 1 für eine indirekte Ladeluftkühlung dargestellt. Die vom Verdichter des Aufladegerätes V kommende Ladeluft wird in einem Ladeluft/Kühlmittel-Kühler 2 gekühlt und anschließend dem Motor M zugeführt. Eine Niedertemperatur-Kühlmittelkreislauf-Pumpe NP wälzt das Kühlmittel im Niedertemperatur-Kühlmittelkreislauf 1 um. Hierbei gelangt das Kühlmittel von der Pumpe NP zum Ladeluft/Kühlmittel-Kühler 2, in dem das Kühlmittel die Ladeluft kühlt, zu einem Niedertemperatur-Kühlmittel-Kühler 3. Neben dem Niedertemperatur-Kühlmittelkreislauf 1 ist ein Haupt-Kühlmittelkreislauf 11 vorgesehen. Das Kühlmittel des Haupt-Kühlmittelkreislaufs 11 wird mittels einer Pumpe P umgewälzt und gelangt von der Pumpe P kommend zum Motor M. Je nach der Temperatur des Kühlmittels wird dieses, geregelt mit Hilfe eines Thermostats 12, zum Haupt-Kühler 13 und wieder zur Pumpe P oder über einen Bypass 14 vorbei am Haupt-Kühler 13 direkt zur Pumpe P geleitet. In einem Temperatur-Übergangsbereich erfolgt eine Aufteilung der Kühlmittelströmung am Thermostat 12 in einen Teilstrom zum Haupt-Kühler 13 und einen Teilstrom über den Bypass 14.

Die US 4325219 offenbart ein Zweikreis-Motorkühlungssystem.

Eine derartige Kreislaufanordnung lässt noch Wünsche offen.

Es ist Aufgabe der Erfindung, eine Kreislaufanordnung der eingangs genannten Art zu verbessern.

Diese Aufgabe wird gelöst durch eine Kreislaufanordnung mit den Merkmalen des Anspruchs 1.

Erfindungsgemäß ist eine Kreislaufanordnung mit einem Niedertemperatur-Kühlmittelkreislauf zur Kühlung von Ladeluft bei einem Kraftfahrzeug mit einem Aufladegerät mit einem Ladeluft/Kühlmittel-Kühler vorgesehen, wobei ein Temperatur-Sensor am Kühlmittelaustritt des LadeluftlKühlmittel-Kühlers oder kurz danach zur Messung der Kühlmittelaustritts-Temperatur vorgesehen ist und dass der Temperatur-Sensor ein Thermostat ist, der einen Kühlmitteldurchsatz durch den Ladeluft/Kühlmittel-Kühler in Abhängigkeit der ermittelten Kühlmittel-Temperatur regelt, wobei das Thermostat dem Ausgang des Ladeluft/Kühlmittel-Kühlers nachgeschaltet ist und der Temperatur-Sensor in ein der Kühlmittelleitung dienendes Kunststoffteil integriert ist, wobei das Kunststoffteil mittels Kunststoff-Spritzgießens hergestellt ist.

Dies ermöglicht eine Kühlmitteldurchsatzregelung in Abhängigkeit der Kühlmittelaustritts-Temperatur des Kühlmittels aus dem Ladeluft/Kühlmittel-Kühler. Hierbei kann der Sensor in den Austritt aus dem Ladeluft/Kühlmittel-Kühler integriert sein oder aber kurz nach dem Ladeluft/Kühlmittel-Kühler angeordnet sein, wobei der Abstand zum Ladeluft/Kühlmittel-Kühler möglichst klein sein sollte, um eine optimale und insbesondere schnelle Regelung zu gewährleisten.

Die Temperatur kann über einen Temperatur-Sensor, der als Thermostat ausgebildet ist, direkt ermittelt werden, wobei durch diese Ausgestaltung kein separat ausgebildetes Regelventil oder eine andere Vorrichtung zur Regelung des Kühlmittelvolumenstroms erforderlich ist. Ist ein einfacher Temperatur-Sensor vorgesehen, so erfolgt eine Kühlmittelvolumenstromregelung anhand des Messwerts mittels eines Regelventils oder einer anderen Vorrichtung zur Regelung des Kühlmittelvolumenstroms. Dabei kann das Regelventil o.ä. vor einem Niedertemperatur-Kühlmittel-Kühler und vor dem Ladeluft/Kühlmittel-Kühler angeordnet sein. Alternativ kann es auch nach dem Temperatur-Sensor angeordnet sein.

Der Temperatur-Sensor ist bevorzugt in ein der Kühlmittelleitung dienendes Kunststoffteil, insbesondere ein Kunststoff-Spritzgussteil, integriert.

Bevorzugt ist der Niedertemperatur-Kühlmittelkreislauf mit einem Haupt-Kühlmittelkreislauf verbunden, so dass ein Austausch von Kühlmittel zwischen beiden Kühlmittelkreisläufen erfolgt.

Im Folgenden wird die Erfindung anhand zweier Ausführungsbeispiele unter Bezugnahme auf die Zeichnung im Einzelnen erläutert. Es zeigen:
- Fig. 1: eine Kreislaufanordnung gemäß dem ersten Ausführungs- beispiel,
- Fig. 2: eine Thermostatkennlinie für die Regelung des Niedertempera- tur-Kühlmittel-Volumenstroms mit dem Volumenstromanteil des Niedertemperatur-Kühlmittelkreislaufs in Verhältnis zu dem des Haupt-Kühlmittelkreislaufs über der Kühlmittel-Temperatur am Austritt des Ladeluft/Kühlmittel-Kühlers,
- Fig. 3: eine perspektivische Ansicht eines Ladeluft/Kühlmittel-Kühlers,
- Fig. 4: eine perspektivische Ansicht einer Variante der Anordnung ei- nes Sensors,
- Fig. 5: eine Ansicht auf Fig. 4 von unten,
- Fig. 6: ein Diagramm zur Darstellung der Optimierung des Kühlmittel- Volumenstroms des Niedertemperatur-Kühlmittel-Kühlers für unterschiedliche Betriebspunkte, wobei die Temperatur der Ladeluft über dem Volumenstromanteil des Niedertemperatur- Kühlmittelkreislaufs im Verhältnis zu dem des Haupt- Kühlmittelkreislaufs dargestellt ist,
- Fig. 7: eine Kreislaufanordnung gemäß dem zweiten Ausführungsbei- spiel, und
- Fig. 8: eine Kreislaufanordnung gemäß dem Stand der Technik.

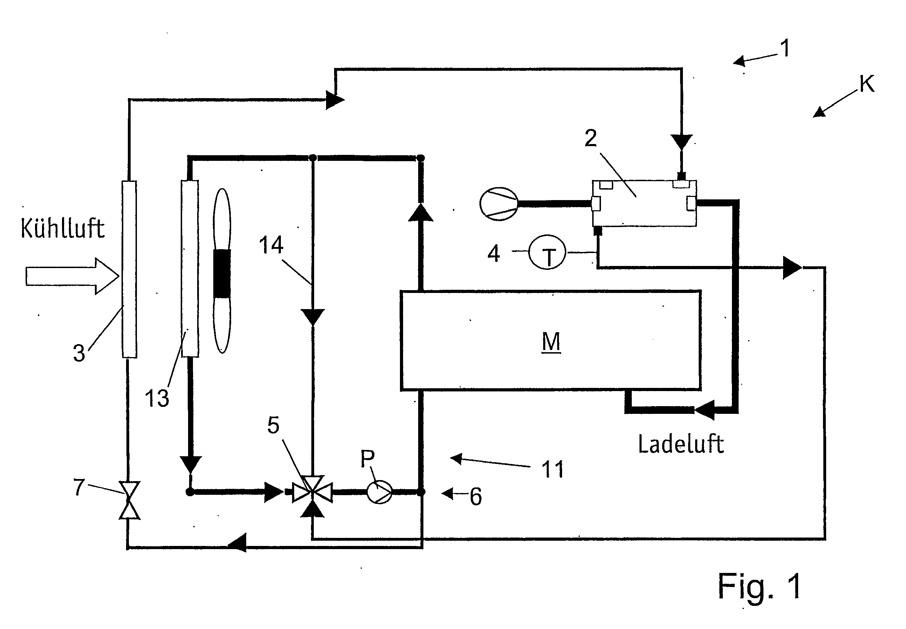

Fig. 1 zeigt eine Kreislaufanordnung K, welche zur Ladeluft-Kühlung und der Motor-Kühlung dient. Hierbei ist ein Niedertemperatur-Kühlmittelkreislauf 1 mit einem Haupt-Kühlmittelkreislauf 11 gekoppelt. Im der Ladeluft-Kühlung dienenden Teil der Kreislaufanordnung K ist ein Ladeluft/Kühlmittel-Kühler 2 und ein diesem direkt nachgeordneter Sensor 4 angeordnet. Über ein Thermostat 5 gelangt das Kühlmittel zur Pumpe P. Hiernach ist eine Verzweigung 6 vorgesehen, wobei der zum Motor M führende Teil an späterer Stelle näher erläutert wird. Nach der Verzweigung 6 gelangt das Kühlmittel über ein Regelventil 7 zum Niedertemperatur-Kühlmittel-Kühler 3 und wiederum zum Ladeluft/Kühlmittel-Kühler 2, in dem die verdichtete Ladeluft gekühlt wird. Der andere Teil des Kühlmittels wird nach der Verzweigung 6 zum Motor M geführt. Je nach Temperatur des Kühlmittels wird dasselbe vollständig durch einen Haupt-Kühlmittel-Kühler 13 oder einen Bypass 14 und wieder zum Thermostat 5 geleitet, oder es erfolgt eine Aufteilung in Teilströme durch den Haupt-Kühlmittel-Kühler 13 und den Bypass 14.

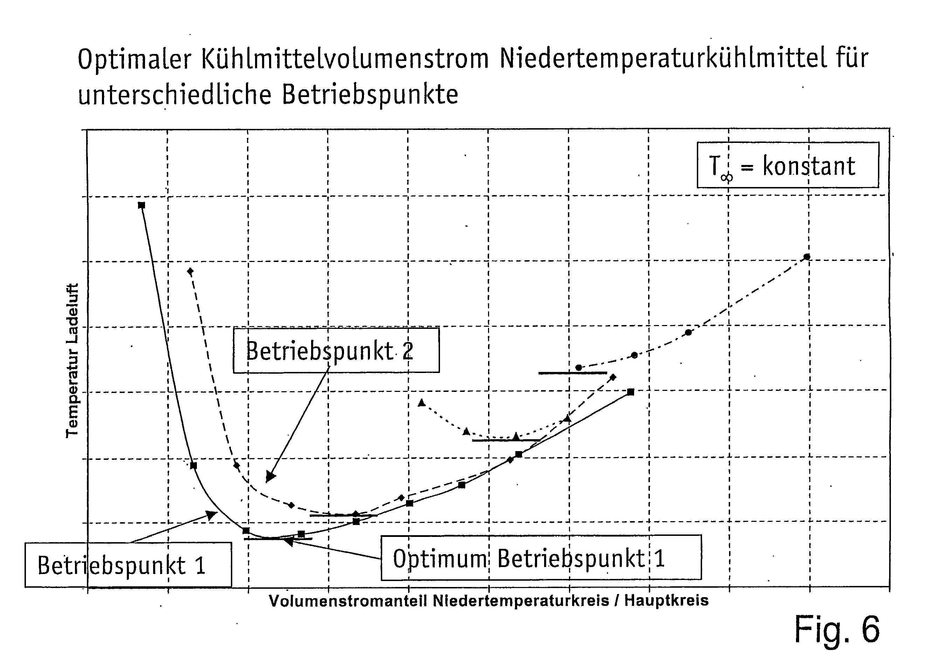

Zur Optimierung der indirekten Ladeluftkühlung ist eine Kühlmitteldurchsatzregelung im Niedertemperatur-Kühlmittel-Kreislauf vorgesehen. Hierbei ist die optimale Kühlmittel-Austrittstemperatur aus dem Ladeluft/Kühlmittel-Kühler 2 nahezu unabhängig von der Außentemperatur. Der in Fig. 6 dargestellte Zusammenhang besitzt daher für einen großen Umgebungstemperaturbereich Gültigkeit. Um schnell auf Lastwechsel reagieren zu können, ist der Temperatur-Sensor 4 möglichst unmittelbar am Kühlmittel-Austritt des Ladeluft/Kühlmittel-Kühlers 2 angeordnet. Mittels der vom Sensor 4 ermittelten Messwerte wird der Kühlmitteldurchsatz auf an sich bekannte Weise geregelt.

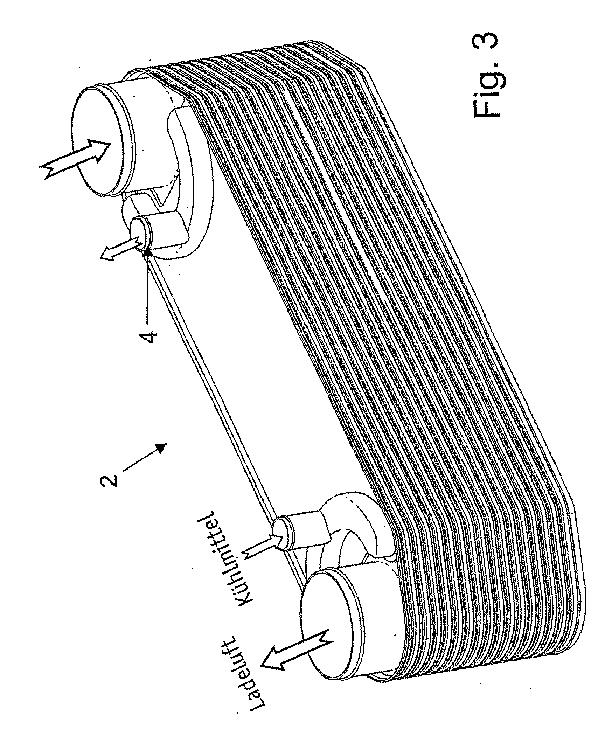

Gemäß dem vorliegenden Ausführungsbeispiel ist der Sensor 4 in den Kühlmittel-Austritt des Ladeluft/Kühlmittel-Kühlers 2 integriert, wie Fig. 3 entnommen werden kann. Auf Grund der Problematik bei der Integration in einen Metall-Wärmetauscher wird gemäß dem ersten Ausführungsbeispiel der Sensor 4 in ein Spritzguss-Kunststoffteil integriert, das gleichzeitig der Verteilung des Kühlmittels dient.

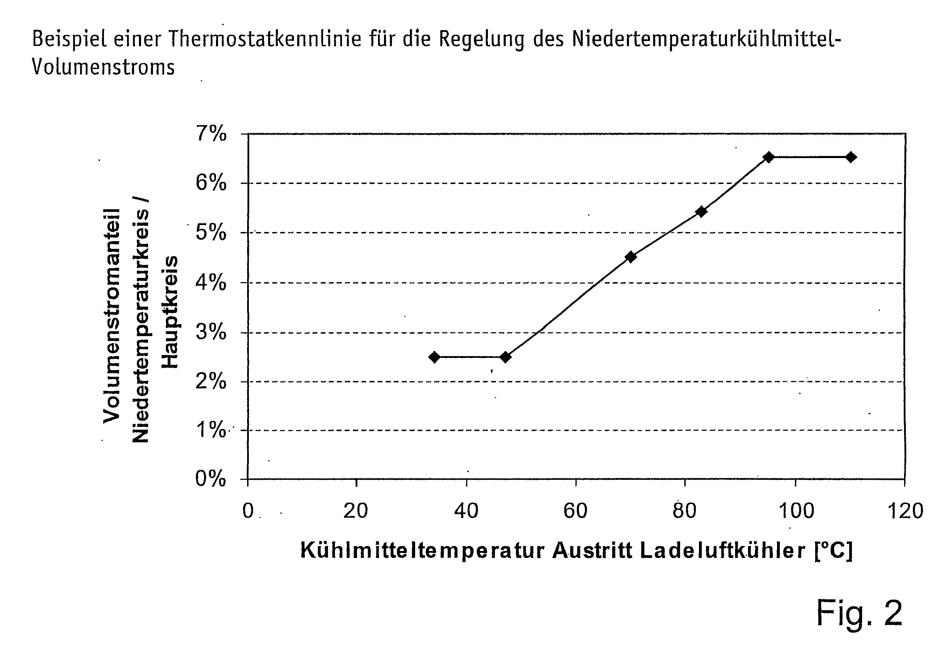

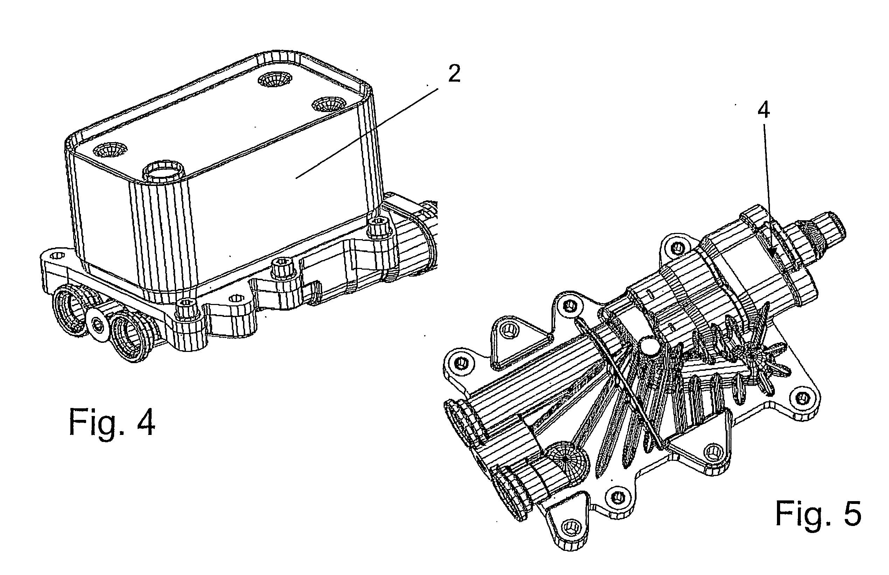

Eine Variante der Anordnung des Sensors 4 in dem Ladeluft/Kühlmittel-Kühler 2 ist in den Figuren 4 und 5 dargestellt. Hierbei wird der Temperatur-Sensor 4 durch einen Thermostat gebildet, der ein Dehnstoffelement als Aktuator aufweist. Hierbei hat der Thermostat einen minimalen Durchsatz (Leckage), der nötig ist, um zu garantieren, dass die Information über die Temperatur des Kühlmittels bei einem Lastsprung schnell zum Aktuator gelangt und zur Ladeluftkühlung im Schwachlastbereich ausreicht. Der maximale Durchsatz ist derart bemessen, dass bei Volllast ein lokales Sieden des Kühlmittels, insbesondere im Ladeluft/Kühlmittel-Kühler 2 oder danach, vermieden wird. Öffnungsbeginn und -ende richten sich nach den für die optimale Durchsatzregelung erforderlichen Temperaturniveau (vgl. in Fig. 2 dargestellte Thermostatkennlinie). Der Bereich zwischen Leckagedurchsatz und maximalem Durchsatz ist so definiert, dass der Start der Thermostat-Öffnung im Temperaturbereich zwischen 40°C und 60°C des Kühlmittels am Austritt des Ladeluft/Kühlmittel-Kühlers 2 liegt, und die Voll-Öffnung des Thermostats zwischen 90°C und 110°C Kühlmittel-Temperatur an der Messstelle erreicht ist. Hierbei ist bei Voll-Öffnung des Thermostats der Kühlmitteldurchsatz zwei- bis viermal so groß, wie die eingestellte Leckage im geschlossenen Zustand des Thermostats. Gemäß dem vorliegenden Ausführungsbeispiel ist der Verlauf der Kühlmittel-Volumenstromzunahme linear, kann jedoch auch progressiv, degressiv oder unstetig verlaufend ausgebildet sein.

Gemäß dem ersten Ausführungsbeispiel erfolgt - im Gegensatz zu der direkten Regelung über das Thermostat - eine Regelung in Abhängigkeit der vom Temperatur-Sensor 4 ermittelten Temperatur des Kühlmittels über das Regelventil 7, welches vor dem Niedertemperatur-Kühlmittel-Kühler 3 im Niedertemperatur-Kühlmittelkreislauf 1 angeordnet ist.

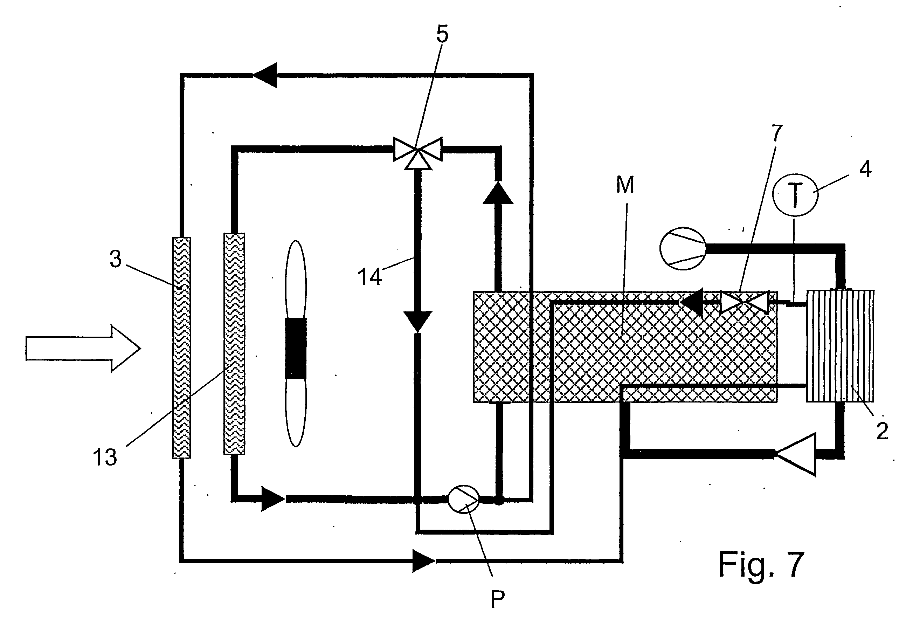

Fig. 7 zeigt eine Kreislaufanordnung K gemäß dem zweiten Ausführungsbeispiel. Hierbei ist das Regelventil 7 hinter dem Temperatur-Sensor 4 angeordnet. Ansonsten stimmt die Kreislaufanordnung K des zweiten Ausführungsbeispiels mit der des ersten Ausführungsbeispiels im Wesentlichen, das heißt bis auf die Anordnung des Thermostats 5 an der Abzweigung des Bypasses im Haupt-Kühlmittelkreislauf und nicht an der Rückführung des Bypasses in den Haupt-Kühlmittelkreislauf, überein.

Eine Regelung des Kühlmitteldurchsatzes durch den Ladeluft/Kühlmittelkühler erfolgt insbesondere durch einen elektrischen Steller und/oder durch eine Beheizung des Temperatursensors, insbesondere des Thermostats.

Bevorzugt erfolgt die Regelung des Kühlmitteldurchsatzes durch den Ladeluft/Kühlmittelkühler unter Einbeziehung einer Drehzahl und/oder oder Last, insbesondere eines Antriebsmotors des Kraftfahrzeugs, einer Fahrgeschwindigkeit des Kraftfahrzeugs, einer Außentemperatur und/oder eines Umgebungsdruckes.

### Bezugszeichenliste

- 1: Niedertemperatur-Kühlmittelkreislauf
- 2: Ladeluftl/Kühlmittel-Kühler
- 3: Niedertemperatur-Kühlmittel-Kühler
- 4: Sensor
- 5: Thermostat
- 6: Verzweigung
- 7: Regelventil
- 11: Haupt-Kühlmittelkreislauf
- 13: Haupt-Kühlmittel-Kühler
- 14: Bypass
- K: Kreislaufanordnung
- M: Motor
- NP: Niedertemperatur-Kühlmittelkreislauf-Pumpe
- P: Pumpe

## Patentansprüche

1. Kreislaufanordnung mit einem Niedertemperatur-Kühlmittelkreislauf (1) zur Kühlung von Ladeluft bei einem Kraftfahrzeug mit einem Aufladegerät mit einem Ladeluft/Kühlmittel-Kühler (2), wobei ein Temperatur-Sensor (4) am Kühlmittelaustritt des Ladeluft/Kühlmittel-Kühlers (2) oder kurz danach zur Messung der Kühlmittelaustritts-Temperatur vorgesehen ist, wobei der Temperatur-Sensor (4) ein Thermostat ist, der einen Kühlmitteldurchsatz durch den Ladeluft/Kühlmittel-Kühler (2) in Abhängigkeit der ermittelten Kühlmittel-Temperatur regelt, wobei das Thermostat dem Ausgang des Ladeluft/Kühlmittel-Kühlers nachgeschaltet ist und der Temperatur-Sensor (4) in ein der Kühlmittelleitung dienendes Kunststoffteil integriert ist, wobei das Kunststoffteil mittels Kunststoff-Spritzgießens hergestellt ist.

2. Kreislaufanordnung nach Anspruch 1, **dadurch gekennzeichnet, dass** der Niedertemperatur-Kühlmittelkreislauf (1) mit einem Haupt-Kühlmittelkreislauf (11) verbunden ist, so dass ein Austausch von Kühlmittel erfolgt.

3. Kreislaufanordnung nach Anspruch 2, **dadurch gekennzeichnet, dass** im Niedertemperatur-Kühlmittelkreislauf (1) ein Regelventil (7) angeordnet ist.

4. Kreislaufanordnung nach Anspruch 3, **dadurch gekennzeichnet, dass** das Regelventil (7) vor einem Niedertemperatur-Kühlmittel-Kühler (3) oder vor dem Ladeluft/Kühlmittel-Kühler (2) angeordnet ist.

5. Kreislaufanordnung nach einem der vorhergehenden Ansprüche, **dadurch gekennzeichnet, dass** das vom Ladeluft/Kühlmittel-Kühler (2) kommende Kühlmittel vor einer Pumpe (P) einem Haupt-Kühlmittelkreislauf (11) zugeführt wird.

6. Verfahren zum Betreiben einer Kreislaufanordnung (K) nach einem der vorhergehenden Ansprüche mit einem Niedertemperatur-Kreislauf (1) zur Kühlung von Ladeluft bei einem Kraftfahrzeug mit einem Aufladegerät mit einem Ladeluft/Kühlmittel-Kühler (2), **dadurch gekennzeichnet, dass** die Regelung des Kühlmitteldurchsatzes durch den Ladeluft/Kühlmittel-Kühler (2) in Abhängigkeit der am Ladeluft/Kühlmittel-Kühler (2) ermittelten Kühlmittel-Temperatur erfolgt.

7. Verfahren nach Anspruch 6, **dadurch gekennzeichnet, dass** die Regelung des Kühlmitteldurchsatzes durch den Ladeluft/Kühlmittel-Kühler unter Einbeziehung einer Drehzahl und/oder Last, insbesondere eines Antriebsmotors des Kraftfahrzeugs, einer Fahrgeschwindigkeit des Kraftfahrzeugs, einer Außentemperatur und/oder eines Umgebungsdrucks erfolgt.

## Claims

1. A circuit arrangement comprising a low temperature coolant circuit (1) for cooling charge air in a motor vehicle comprising a charging device having a charge air/coolant radiator (2), wherein a temperature sensor (4) is provided at the coolant outlet of the charge air/coolant radiator (2) or shortly downstream thereof for measuring the coolant outflow temperature, wherein the temperature sensor (4) is a thermostat that regulates coolant throughput through the charge air/coolant radiator (2) as a function of the coolant temperature that was measured, wherein the thermostat is installed downstream of the outlet of the charge air/coolant radiator, and the temperature sensor (4) is integrated in a plastic part that is used to direct coolant, wherein the plastic part is manufactured using plastic injection molding.

2. The circuit arrangement according to claim 1, **characterized in that** the low temperature coolant circuit (1) is connected to a main coolant circuit (11), thereby enabling coolant to be exchanged.

3. The circuit arrangement according to claim 2, **characterized in that** a control valve (7) is disposed in the low temperature coolant circuit (1).

4. The circuit arrangement according to claim 3, **characterized in that** the control valve (7) is disposed upstream of a low temperature coolant radiator (3) or upstream of the charge air/coolant radiator (2).

5. The circuit arrangement according to one of the preceding claims, **characterized in that** the coolant coming from the charge air/coolant radiator (2) upstream of a pump (P) is supplied to a main coolant circuit (11).

6. A method for operating a circuit arrangement (K) according to one of the preceding claims, comprising a low temperature circuit (1) for cooling charge air in a motor vehicle having a charging device comprising a charge air/coolant radiator (2), **characterized in that** the coolant throughput through the charge air/coolant radiator (2) is regulated as a function of the coolant temperature measured at the charge air/coolant radiator (2).

7. The method according to claim 6, **characterized in that** the coolant throughput through the charge air/coolant radiator is regulated with consideration for a rotational speed and/or load, in particular of a drive motor of the motor vehicle, a ground speed of the motor vehicle, an external temperature and/or an ambient pressure.

## Revendications

1. Agencement de circuits comprenant un circuit de liquide de refroidissement basse température (1) servant au refroidissement de l'air de suralimentation d'un véhicule automobile comprenant un compresseur comportant un refroidisseur (2) d'air de suralimentation / de liquide de refroidissement, où il est prévu un capteur de température (4) servant à mesurer la température de sortie du liquide de refroidissement et placé au niveau de la sortie de liquide de refroidissement du refroidisseur (2) d'air de suralimentation / de liquide de refroidissement ou bien tout près en aval de ladite sortie de liquide de refroidissement, où le capteur de température (4) est un thermostat qui, en fonction de la température déterminée du liquide de refroidissement, régule un débit de liquide de refroidissement traversant le refroidisseur (2) d'air de suralimentation / de liquide de refroidissement, où le thermostat est placé en aval de la sortie du refroidisseur d'air de suralimentation / de liquide de refroidissement, et le capteur de température (4) est intégré dans une pièce en matière plastique servant de conduite de liquide de refroidissement, où la pièce en matière plastique est fabriquée par un procédé de moulage par injection de la matière plastique.

2. Agencement de circuits selon la revendication 1, **caractérisé en ce que** le circuit de liquide de refroidissement basse température (1) est raccordé à un circuit de liquide de refroidissement principal (11), de sorte qu'il se produit un échange de liquide de refroidissement.

3. Agencement de circuits selon la revendication 2, **caractérisé en ce qu'**une soupape de régulation (7) est disposée dans le circuit de liquide de refroidissement basse température (1).

4. Agencement de circuits selon la revendication 3, **caractérisé en ce que** la soupape de régulation (7) est disposée en amont d'un refroidisseur de liquide de refroidissement basse température (3) ou en amont du refroidisseur (2) d'air de suralimentation / de liquide de refroidissement.

5. Agencement de circuits selon l'une quelconque des revendications précédentes, **caractérisé en ce que** le liquide de refroidissement provenant du refroidisseur (2) d'air de suralimentation / de liquide de refroidissement est fourni à un circuit de liquide de refroidissement principal (11) placé en amont d'une pompe (P).

6. Procédé de fonctionnement d'un agencement de circuits (K) selon l'une quelconque des revendications précédentes comprenant un circuit de liquide de refroidissement basse température (1) servant au refroidissement d'air de suralimentation concernant un véhicule automobile comprenant un compresseur comportant un refroidisseur (2) d'air de suralimentation / de liquide de refroidissement, **caractérisé en ce que** la régulation du débit du liquide de refroidissement traversant le refroidisseur (2) d'air de suralimentation / de liquide de refroidissement se produit en fonction de la température du liquide de refroidissement déterminée au niveau du refroidisseur (2) d'air de suralimentation / de liquide de refroidissement.

7. Procédé selon la revendication 6, **caractérisé en ce que** la régulation du débit du liquide de refroidissement traversant le refroidisseur d'air de suralimentation / de liquide de refroidissement se produit en intégrant une vitesse de rotation et / ou une charge, en particulier d'un moteur d'entraînement du véhicule automobile, une vitesse de marche du véhicule automobile, une température extérieure et / ou une pression ambiante.
